# EUROPEAN PATENT SPECIFICATION

(11) **EP 2 338 600 B1**
(45) Date of publication and mention of the grant of the patent: **12.07.2017**
(21) Application number: 10194258.9
(22) Date of filing: 09.12.2010
(51) Int. Cl.: B01L 9/00, G01N 35/00, G01N 35/10

(54) **Process head positioning**
Prozesskopfpositionierung
Positionnement de tête de procédé

(30) Priority: 10.12.2009 EP 09178712
(43) Date of publication of application: 29.06.2011
(73) Proprietor: F. Hoffmann-La Roche AG, 4070 Basel (CH); Roche Diagnostics GmbH, 68305 Mannheim (DE)
(72) Inventor: Belz, Renato, 6023 Rothenburg (CH); Thalmann, Christian, 6365 Kehrsiten (CH)
(74) Representative: Herren, Barbara

(56) References cited:
- EP-A1- 1 652 583
- WO-A2-2009/112952
- US-A1- 2003 017 604
- US-A1- 2007 020 152
- US-A1- 2008 031 781
- US-A1- 2009 269 248
- US-B1- 6 254 826
- US-B1- 7 360 984

## Description

### Background

Analytical systems used in the field of diagnostics require processing of samples to be analysed. Such processing involves transfer of vessels, or of liquid samples and reagents from on e vessel to another. For higher throughput, simultaneous processing is often performed with processing devices which can handle multiple consumables simultaneously. Engagement of process device and consumables requires proper alignment.

US 6,846,456 discloses an assay work station. Process head (400) is aligned with pipette tips (362) or receptacles (262) which are held by racks (302) or (202) by engagement of rods (408), (410) located on the process head (400) with guide holes (510), (512) located on guide supports (500). Guide supports and racks are separately mounted on a base structure (100). The disadvantage of the prior art is that a multitude of positionings influence the alignment of process device and consumable. Imprecisions of positionings caused by imprecise manufacturing or mounting of the positioning elements or guide supports with the positioning elements or the racks (302), (202) can impair the precision of the alignment of process device and consumable.

US 2003/017604 discloses a method of positioning a process device with a pipette tip holder. The positioning elements of the process device engage with positioning elements which are located on the tip rack holder which hold the tip rack.

### General Description

The invention relates to a method of positioning a process head with a tip rack according to claim 1.

### Figure legends

Fig. 1 shows a view of an assembled rack loaded with pipette tips
Fig. 2 shows a view of a rack without loaded tips
Fig. 3 shows a cross section through the longer side walls of the rack loaded with two types of pipette tips.
Fig. 4 shows a perspective view of the top-side of the lower rack.
Fig. 5 shows a perspective view of the bottom part of the lower rack.
Fig. 6 shows a perspective view of the top-side of the insert rack.
Fig. 7 shows a perspective view of the bottom part of the insert rack.
Fig. 8 shows a perspective view of the top-side of the upper rack.
Fig. 9 shows a perspective view of the bottom part of the upper rack.
Fig. 10 shows a partial cross-sectional view through the assembled rack with pipette tips loaded.
Fig. 11 shows a partial cross-sectional view through the assembled rack without pipette tips loaded.
Fig. 12 shows a perspective view of the upper rack loaded with pipette tips, with details of the first type of tips sitting on the through bore-holes.
Fig. 13 shows a perspective view of the upper rack loaded with pipette tips, with details of the second type of tips sitting on the rim of through bore-holes.
Fig. 14 a) shows a perspective view of the first and second types of pipette tips. B) shows a pipette needle.
Fig. 15 shows a detailed perspective view of the alignment of the positioning elements on the bottom of the process head and the positioning elements on the top of the upper rack for alignment of the process head with the first type of pipette tips.
Fig. 16 shows a detailed perspective view of the engagement of the positioning elements on the bottom of the process head and the positioning elements on the top of the upper rack.
Fig. 17 shows a detailed perspective view of the alignment of the positioning elements on the bottom of the process head and the positioning elements on the top of the upper rack for alignment of the process head with the second type of pipette tips.
Fig. 18 shows a detailed perspective view of the process head following engagement of the second type of pipette tips.
Fig. 19 shows a perspective view of the positioning elements on a side wall of the rack and on the process deck for initial positioning of the rack within the analyzer.
Fig. 20 shows a perspective view of the engagement of positioning elements on a side wall of the rack and on the process deck for initial positioning of the rack within the analyzer.
Fig. 21 shows a detailed sectional view of the bottom of a chamber for accommodating the second type of pipette tips in the insert rack and the ridge between two chambers of the lower rack.
Fig. 22 shows a detailed sectional view of the bottom of chambers of the lower rack.
Fig. 23 shows a sectional view of the site of interaction between the upper rack and the insert rack with a second type of pipette tip inserted into a through bore-hole.
Fig. 24 shows a sectional view of the site of interaction between the upper rack and the insert rack without a second type of pipette tip inserted into a through bore-hole.
Fig. 25 Partial view of a second embodiment of tip rack.

### Detailed Description

### Analytical apparatus and method for isolating and analyzing an analyte

A method for isolating and analyzing an analyte that may be present in a fluid sample is disclosed. Said method comprises the automated steps of
a) transferring said fluid sample from a sample vessel to a processing vessel with a pipette tip;
b) combining together a solid support material and said fluid sample in a well of said processing vessel for a period of time and under conditions sufficient to permit said analyte to be immobilized on the solid support material;
c) isolating the solid support material from other material present in the fluid sample in a separation station;
d) and purifying the analyte in the separation station by separating the fluid sample from the solid support material and washing the materials one or more times with a wash buffer.

In one embodiment, said pipette tip used in step a) is re-used after step a).
In one embodiment, said pipette tip is a pipette tip of a first type, and said pipette tip of a first type is stored in a rack comprising pipette tips of a first type and pipette tips of a second type. In one embodiment, said pipette tips of a first and second type are stored in said rack at least between being used for pipetting.

In one embodiment of the method hereinbefore described, step a) comprises
a1) engaging pipette tips of a first type which are held in a rack in a first position with a first process head;
a2) transferring said fluid sample from a sample vessel to a processing vessel with pipette tips of a first type engaged to a first process head;
a3) placing said pipette tips in said rack and disengaging said pipette tips from said process head;
a4) transporting said rack comprising said pipette tips and said processing vessel to second positions;
a5) engaging said pipette tips of a first type which are held in said rack with a second process head in said second position.

In one embodiment, the processing vessel comprises more than one receptacle. In one embodiment, the processing vessel is a multiwell plate. The method may additionally comprise the step of
e) reacting said purified analyte with reagents necessary to obtain a detectable signal.

Re-use of pipette tips leads to a reduction of disposable consumables used in the analytical method and to cost reductions. In one embodiment, the washing in step d) comprises aspirating and dispensing the washing buffer with a process head engaged to pipette tips.

The term "receptacle" as used herein relates to a single vessel (or tube) or to a tube comprised in a multi-tube unit, or to a well (or vessel) of a multiwell plate.

The term "vessel" is understood to mean a single vessel or a single vessel in a multi-tube unit, a multiwell plate or a multi-tube unit or a well of a multiwell plate.

In one embodiment, the reacting comprises generating a detectable signal. The method may additionally comprise the step of detecting a detectable signal.

The term "analyte" as used herein may be any type of biomolecule which is of interest for detection, and the detection thereof is indicative of a diagnostic status of an organism. The organism can be animal or, more preferably, human. In one embodiment, analytes are proteins, polypeptides, antibodies or nucleic acids. In one specific embodiment, the analyte is a nucleic acid.

The term "reacting" as used herein relates to any type of chemical reaction of the analyte with reagents that is necessary to obtain a detectable signal. In one embodiment, said reacting comprises amplification. Amplification may be understood as any type of enhancement of a signal. Thus, amplification can be a conversion of a molecule by an enzyme, wherein said enzyme is coupled or bound to the analyte, leading to a detectable signal, wherein more signal molecules are formed than analyte molecules are present. One such non-limiting example is a formation of a chemiluminescent dye, e.g. using ECL. The term amplification further relates to nucleic acid amplification, if the analyte is a nucleic acid. This includes both linear, isothermal and exponential amplifications. Non-limiting examples of nucleic acid amplification methods are TMA, SDA, NASBA, PCR, including real-time PCR. Such methods are well known to the skilled person.

The term "solid support" as used herein relates to any type of solid support to which the analyte is capable of binding, either directly by adsorption, or indirectly and specifically. Indirect binding may be binding of an analyte to an antibody immobilized on the solid support, or binding of a tag to a tag binding compound, e.g. binding of 6xHis tags to Ni-chelate. When the analyte is a nucleic acid, such indirect binding is preferably by binding to a capture nucleic acid probe which is homologuous to a target sequence of the nucleic acid of interest. Thus, using capture probes attached on a solid support, a target analyte, preferably a target nucleic acid, can be separated from non-target material, preferably non-target nucleic acid. Such capture probe is immobilized on the solid support. Solid support material may be a polymer, or a composition of polymers. Other types of solid support material include magnetic silica particles, metal particles etc.

Direct binding of nucleic acid to silica particles occurs in the presence of chaotropic compounds. Such binding may also be referred to as direct binding, as opposed to the indirect binding described above. In one embodiment, the solid supports are silica particles which comprise a magnetic or magnetizable material.

A "separation station" is understood to be a station where an analyte is separated from a solid support.

In one embodiment of the method hereinbefore described, the transporting of said rack comprising said pipette tips and said processing vessel to a second positions occurs between a separate first cell of an analytical instrument and a separate second cell, more specifically a processing cell, of said analytical system. In one embodiment, the rack comprises independent chambers to accommodate pipette tips.

In one embodiment, the first type of pipette tips is re-used for the washing in step d).

In one embodiment, the rack additionally comprises a second type of pipette tips. Further disclosed is a method as hereinbefore described, wherein between step d) and e), the analyte is eluted from the magnetic particles. One embodiment comprises the transfer of the analyte from said processing vessel, which is, in one embodiment a multiwell plate, to a reaction vessel, which is, in one embodiment, a multiwell plate, with said second type of pipette tips.

An analytical system for isolating an analyte is disclosed, said system comprising
a) a first position comprising a first receptacle holding a liquid sample comprising an analyte, a second receptacle for holding a liquid sample, a rack holding pipette tips, and a first process head for transferring a liquid sample from the first receptacle to a second receptacle,
b) a second position comprising a station for receiving said second receptacle, and a rack holding station for receiving said rack,
c) a transfer system for transferring the second receptacle and the rack holding pipette tips between the first position and the second position.

In one embodiment, the positions are separate cells. The rack transferred by said transfer system comprises pipette tips which were used in the first position. In one embodiment, the first receptacle is a sample vessel and the second receptacle is a processing vessel. The processing vessel may be a multiwell vessel. Embodiments of said stations are described hereinafter.

In the analytical system herein described, the transport system preferably transfers the receptacle and the rack from the first position to the second separate position. In one embodiment, the second separate position comprises a magnetic separation station. The analytical system additionally may comprise an amplification station.

The transport system of the disclosed system comprises a handler constructed and arranged to grip and transport said rack and said processing vessel from a first to a second location within the system. Further embodiments of handlers are disclosed herein.

The system may be fully automated.

An automated analyzer for isolating and analyzing an analyte comprising a plurality of stations disposed within said analyzer is also disclosed. The plurality of stations comprises a sample dispensing station disposed in a first location. In one embodiment, said sample dispensing station is constructed and arranged to dispense liquid sample comprising an analyte from a sample vessel to a processing vessel with pipette tips held in a rack. Further embodiments of sample dispensing stations are stations comprising a sample vessel, a processing vessel and a liquid dispensing unit. Said liquid dispensing unit may be a process device.

The automated analyzer further comprises a separation station disposed in a second location. In one embodiment, said separation station is constructed and arranged to receive said processing vessel holding said liquid sample and said rack holding pipette tips used in the sample dispensing station and to separate an analyte from other material present in the liquid sample. Another embodiment of a separation station is a separation station comprising movable magnets.

The automated analyzer further comprises a reaction station disposed in a third location, wherein said reaction station is constructed and arranged to analyze said analyte to obtain a detectable signal. Another embodiment of a reaction station is a station comprising an incubator. Said incubator may be a temperature-controlled incubator. Said incubator may be held at one constant temperature. Another embodiment of an incubator is a thermocycler block. In one embodiment, a detector for detecting the detectable signal is integrally connected to the reaction station, more specifically to the incubator as hereinbefore described. An embodiment of a detector comprises a nucleic acid quantification system for periodic measurement and quantification. In one embodiment, the detector additionally comprises a nucleic acid detection system which detects the signal and ascertains the presence or absence of the nucleic acid in the reaction receptacle based upon whether or not a signal above a threshold level is detected.

Alternatively, the automated analyzer additionally comprises a detecting station. The automated analyzer further comprises a transport mechanism. Said transport mechanism comprises a handler for handling consumables. Said handler transports a consumable between stations. In one embodiment, said transport mechanism is constructed and arranged to transport said sample vessel and said rack from said sample dispensing station to said separation station. Further embodiments of the automated analyzer herein described are individual or combined features disclosed herein.

In one embodiment, the analytical apparatus (400) comprises at least one module (401) for processing an analyte, said processing comprising pipetting of a liquid. The processing module (401) comprises:
a) a process head (35) for engaging with pipette tips (3, 4), said process head (35) comprising positioning elements (36) arranged in the lower surface (61) of said process head (35),
b) a tip rack (60, 70) holding pipette tips (3, 4), wherein said tip rack (60, 70) comprises positioning elements (31, 32, 33, 34) capable of engaging mechanically with the positioning elements (36) on the process head (35).

In one embodiment of the analytical apparatus (400) hereinbefore described, said processing module (401) is a module for isolation and purification of an analyte. Therefore, the term "processing" as used herein is understood to relate to isolation and/or separation and/or capture and/or purification of an analyte. In one embodiment, said apparatus (400) comprises a module for preparing samples for processing (402). In one embodiment, said apparatus (400) comprises a module for amplification of said analyte (403). In one embodiment, said apparatus additionally comprises a module (404) for transferring amplification reagents from a storage receptacle to a receptacle comprising a purified analyte. Further embodiments of said apparatus are as hereinbefore and hereinafter described.

An automated analyzer (400) for use in performing a nucleic acid based amplification reaction is also disclosed. Said analyzer comprises a plurality of modules (401, 402, 403). One module is a processing module disposed at a first location within the analyzer constructed and arranged to separate a nucleic acid from other material in a sample. Said processing module comprises a separation device as herein described. The analyzer further comprises an amplification module disposed and arranged at a second location within the analyzer. The amplification module comprises a temperature-controlled incubator for incubating the contents of at least one receptacle, in one embodiment of a multiwell plate comprising the separated nucleic acid and one or more amplification reagents for producing an amplification product indicative of the target nucleic acid in the sample.

Furthermore, an analytical instrument is disclosed comprising :
- a processing module for isolating and purifying an analyte comprising a holding station (470) for holding a rack comprising pipette tips, said rack comprising at least one recess located on one side wall of the rack, and at least one recess located on an opposite second side wall of said rack, wherein said holding station comprises a fixing element, preferably a latch-clip and wherein said fixing element, preferably a latch-clip interacts with said recess by exerting a force against the bottom of said recess; and
- a module (403) for analyzing said purified analyte by reacting said analyte with reagents necessary to obtain a detectable signal.

The analytical instrument may additionally comprise a liquid handling module (404, 500). Further embodiments of the analytical instrument are described herein, either separately or as combinations of embodiments. The analytical instrument disclosed herein additionally comprises a sealing station (410). The sealing station (410) is located in the process module (401).

The term "module" and "cell" are used interchangeably herein.

### Tip rack

A tip rack is disclosed. Such tip racks comprise pipette tips. Tip racks are commonly used in analytical systems for providing pipette tips for pipetting liquids to the system. Such tips are disposable, but can be re-used at least once. Said tip rack comprises independent chambers for accommodating pipette tips.
A rack is disclosed for holding pipette tips. Said rack comprises independent chambers for accommodating at least a first type of pipette tips and a second type of pipette tips. In one embodiment, said rack comprises more than one part. In another embodiment, said rack is an integral one part rack. In one embodiment, the volume of the first type of pipette tips is at least 1 ml and the volume of the second type of pipette tips is below 1 ml. In one embodiment, the volume of the first type of pipette tips is between 1 ml and 1.5 ml, and the volume of the second type of pipette tip is between 10 ul and 600 ul.
In one embodiment, the first type of pipette tips and the second type of pipette tips are stored in said rack in alternate rows. In one embodiment, the rack comprises 48 pipette tips of a first type and 48 pipette tips of a second type. Other numbers of tips are, however, also encompassed. The rack may also comprise more pipette tips of one type than of the other type.
In one embodiment, the independent chambers are vessels.

A three part rack is disclosed for holding pipette tips. Said rack comprises features which make it particularly suited for automated systems. Said rack comprises three parts. An upper rack comprises a surface plate, said surface plate comprises through bore-holes with a seating area for inserting pipette tips in said rack. The rack also comprises a lower rack. Said lower rack comprises independent chambers for accommodating pipette tips of a first type. The third part of said rack is an insert rack. The insert rack is inserted into said lower rack. The insert rack comprises chambers for accommodating pipette tips of a second type. The upper rack is assembled on top of said lower rack and said insert rack.

The rack is, thus, suited for holding more than one type of pipette tips. This is useful in systems in which different volumes of liquid are pipetted with pipette tips.

The rack disclosed herein comprises contamination protection for protecting individual tips from contaminating each other. Such contamination may occur due to droplets or aerosols. Such protection is of particular importance if pipette tips are place in the rack after a first use, before being re-used again. Thus, the rack, in one embodiment comprises rows of open chambers for holding a second type of pipette tips. In one embodiment, said open chambers have a bottom. This bottom separates the chamber holding the second type of pipette tips from the chambers holding the first type of pipette tips. This reduces the risk of contaminations between the first and second types of tips.

In one embodiment, said rows of open chambers for holding pipette tips of a second type alternate with rows of independent chambers for accommodating said pipette tips of a first type. In one embodiment, the inner area of the independent chambers in the lower rack for accommodating said pipette tips of a first type is larger than the inner area of the through bore holes for inserting pipette tips.

In one embodiment, a wall located on the inside of the side walls of the independent chambers of the lower rack for holding pipette tips of a first type extend from the bottom of the lower rack to below the top of the side wall of the independent chambers of the lower rack. Embodiments described hereinbefore and hereinafter relate to a rack comprising pipette tips of a first type, additionally comprising a second type of pipette tips.

Further preferred embodiments of any one tip rack disclosed herein comprise features described above and below without limitation to one specific embodiment by combination with any one of the embodiments disclosed herein.

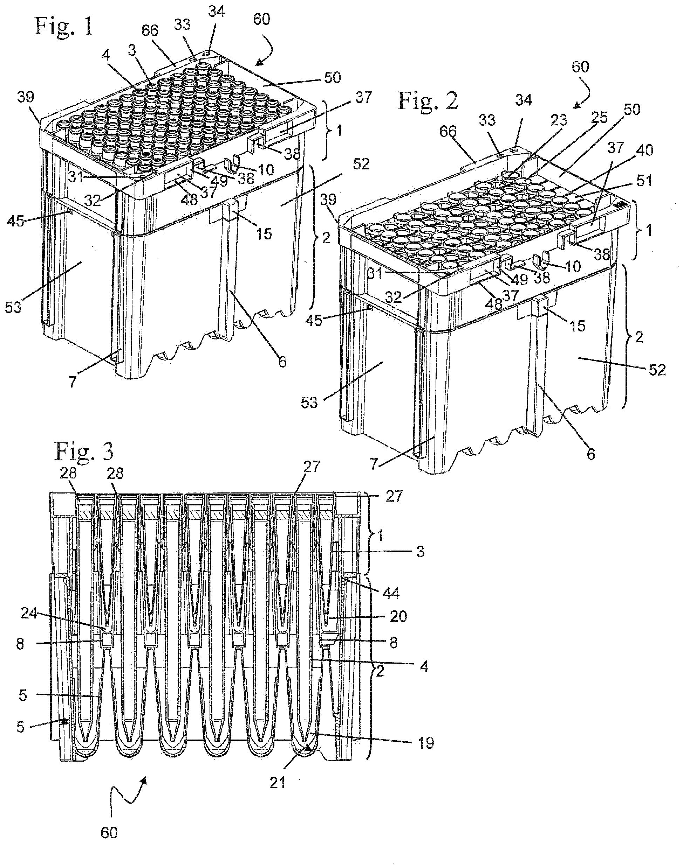

A first embodiment of an exemplary rack (60) (Fig. 1 and 2) comprises multiple parts. An upper rack (1), a lower rack (2) and an insert rack (14) are assembled to one rack for holding and re-using tips (4). In one embodiment, a first type of tips (4) and a second type of tips (3) are held in said rack (60). In one embodiment, tips (4) for sampling, isolating and purifying an analyte and tips (3) for transferring the eluted analyte are held in one rack according to the invention. In one embodiment, the rack (60) elongated tips with a large volume (4) and short tips with a small volume (3). Embodiments of the three parts of racks are described hereinafter.

### Upper rack (1)

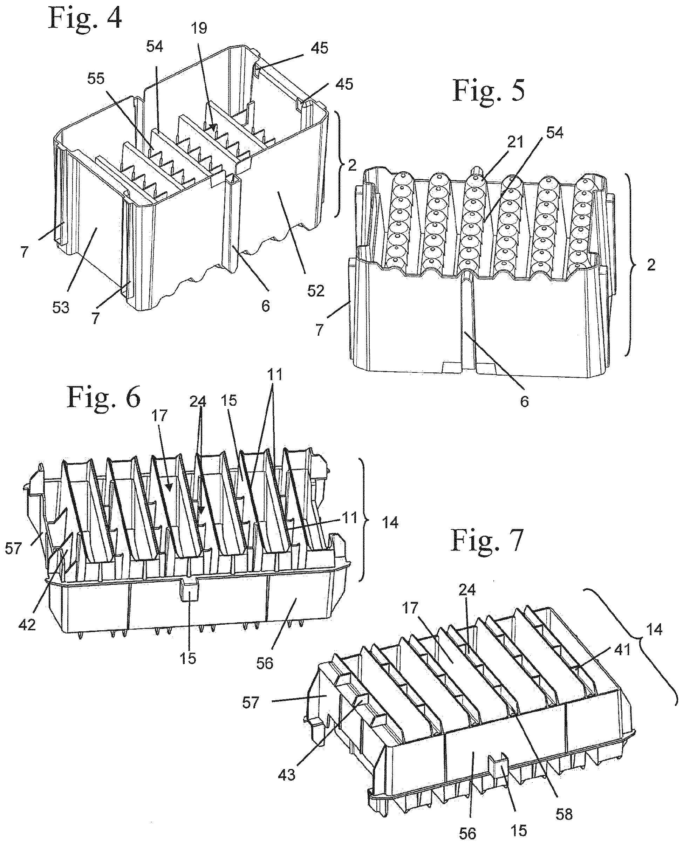

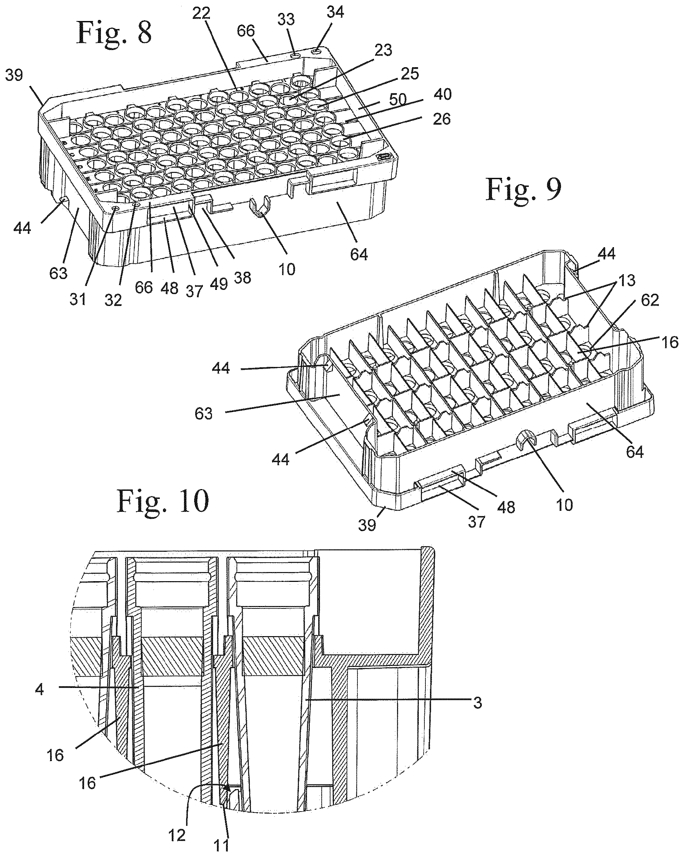

Upper rack (1) comprises a frame (50) and a surface plate (51) located inside said frame (50) (Fig. 9, Fig. 10). Said surface plate (51) comprises through bore-holes (23, 25) (Fig. 4). On the bottom side (62) of said plate (51), separation walls (16) and separation lamellae (18) are located between through bore-holes (23, 25). They provide additional protection against contamination between tips (3, 4) and confer additional stability on the upper rack (1). Certain separation walls (16) also comprise a recess (13). Said recess (13) allows the separation walls (15) of the insert rack (14) to engage with separation walls (16) of the upper rack (1) in an overlapping way for sealing against horizontal flying drops in case of exploded bubbles during tip handling with tip (4). In one embodiment, separation lamellae (18) with recess (13) alternate with separation lamellae (18) without recess.

### Lower rack (2)

Lower rack (2) comprises two long side walls (52) located opposite each other, and two short side walls (53) located opposite each other (Figures 5 and 6). Each short side wall (53) contacts both long side walls (52) to form a frame. The inside space defined by said side walls (52) and (53) comprises chambers (19) which are formed by interior dividing walls (54) with ridge (9) and perpendicular to said walls (54) second walls (55). The chambers (19) comprise bottoms (21) which are, in one embodiment rounded.

Lower rack (2) comprises, on the outside of walls (52) and (53), stacker-guiding elements (6) and (7) which, in one embodiment, are also hardware identifiers.

### Insert rack (14)

Insert rack (14) comprises two long front walls (56) and two short side walls (57). Chambers (24) are formed by separation walls (15) which are arranged parallel to the short side walls (57) (Fig. 7, Fig. 8). These chambers (24) have bottoms (58) and can accommodate the second type of tips (3). Between each chamber (24) is a passage way (17) for a first type of tip (4) which extends into the chambers (19) of the lower rack (2). Chambers (24) may comprise stabilizing ribs (41). The insert rack (14) may comprise additional stabilizing ribs (42, 43)

### Combo-Tip Rack

The multiple part construction of the rack (60) has several advantages. One advantage is that tips (4) with an elongated shape for pipetting large volumes can be stored in independent, closely packed chambers (19). The tips (4), thus, require only a limited space in a horizontal plane for storage, while being able to hold large volumes of liquid. Views of a preferred embodiment are shown in Figs. 1 to 24.

As a further advantage, the inside horizontal cross section area of the chambers (19) for tips (4) is larger than the cross section of the through bore holes of the seating area (22) (Fig. 3). This results in a prevention of capillary forces which may lead to transport of liquid between the chambers (19).

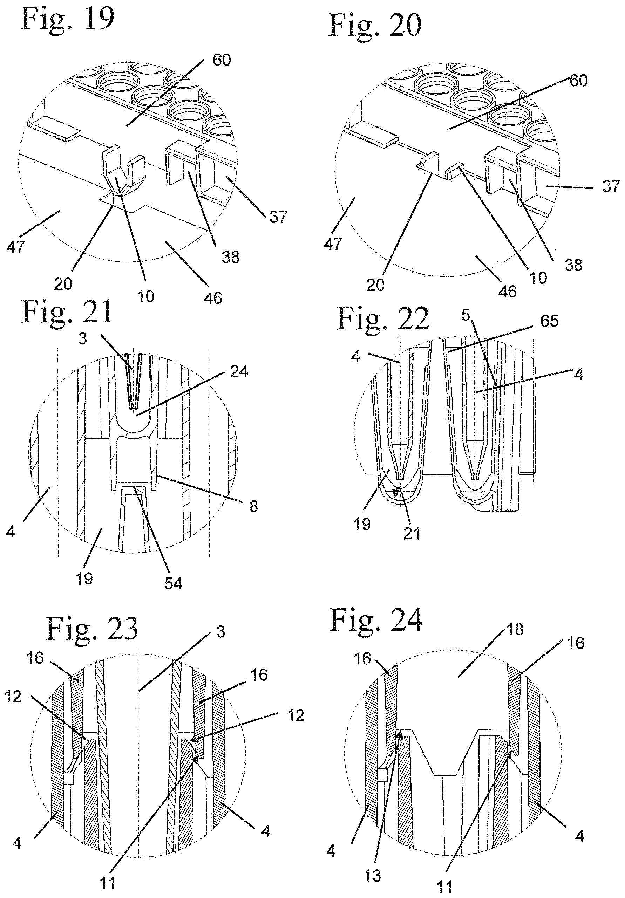

Yet another advantage of the construction of the tip rack (60) is that the inner walls (54) of the chambers (19) are not continuous from the bottom (21) of the chamber (21) to the seat area (22) (Fig. 3). Thus, the transport of liquid from the bottom (21) of the chamber (21) to the seat area (22), and, thus, contamination is prevented. This makes re-use of the pipette tips (4) possible. In addition, chambers (19) comprise a wall (5) located on the inside surface (65) (Fig. 24). Said wall (5), in one embodiment, covers only part of the height of chamber (19). In one embodiment, said wall (5) extends from above the bottom (21) of chamber (19) to below ridge (9) of the inside surface (65) of walls (54) of the lower rack (2). Said wall (5) further prevents capillary effects in chamber (19).

Yet another advantage of the construction of the tip rack (60) is that two different types of tips can be stored in it (Fig. 3). In the present embodiment, a second type of tip (3) is stored in the tip rack (60). The second type of tip is shorter than the first type of tip, and is used to pipette smaller amounts of liquid than is pipetted by the first type of pipette tip. In the present example, the second type of tips is stored in chambers (24) within the insert rack (14) which are located on a higher level than chambers (19) and are hermetically separated from chambers (19), but are open within one row of chambers (24). One advantage of this construction is that it is space saving. In addition, with the chambers (24) located in the insert rack, there is more space available for preventing contamination, e.g. by capillary force, between the chambers (19) of the first type of tips (4). In one embodiment, only the first type of tips (4) is re-used, while the second type of tips (3) is used only once.

Insert rack further comprises ridges (8) on the bottom of chambers (24) (Fig. 3). These ridges (8) prevent splashes of liquid which may be caused by blisters of liquid forming on the tip-end of pipette tip (4) and bursting at the height of ridges (8) from passing into the neighboring chambers (19). The lower rack (2) comprises, at the top of the walls (54) between chambers (19), a ridge (9). Ridge (9) has the same function as ridge (8). Ridge (9) and ridge (8) do not contact each other (Fig. 23). This prevents capillary effects.

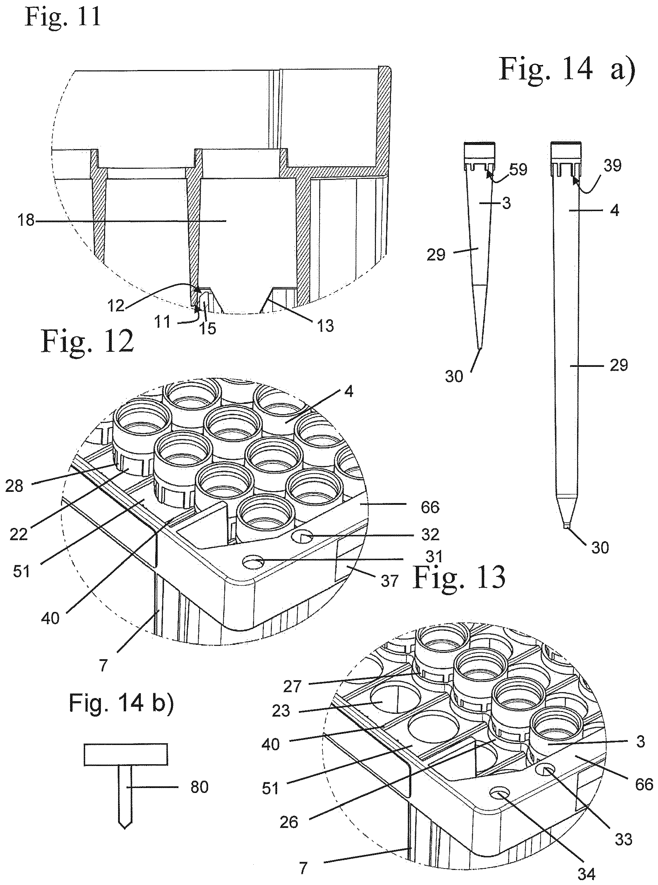

When stored in the rack (60), the tips (3, 4) sit on the seating area (22, 26) of a through bore-hole (25, 23) (Fig. 13, Fig. 14). The through bore-holes (25, 23) are located on a seat area (22, 26). Preferably, the seating area (22) of the through bore-holes (25), is elevated compared to the seating area (26) of the through bore-holes (23) of the first type of tips (4). This has the advantage that when the first type of tips (4) is either replaced in the rack or re-engaged for re-use, in case liquid from the first type of tips (4) contacts the seating area (22) of through bore-hole (25), the liquid can not ascend from the lower seat area (22) to the higher seat area (26), thus preventing contamination of the second type of tips (3).

Preferably, additional capillary channels (40) separate neighboring through bore-holes (23) at the level of the lower seat area (22) and drain off any liquid contacting the lower seat area (22) or the through bore-holes (23) (Fig. 4, 9, 13, 14). This prevents contamination of neighboring through bore-holes (23, 25). An additional advantage of the capillary channels (40) is that the liquid is distributed over a larger area and can evaporate more quickly.

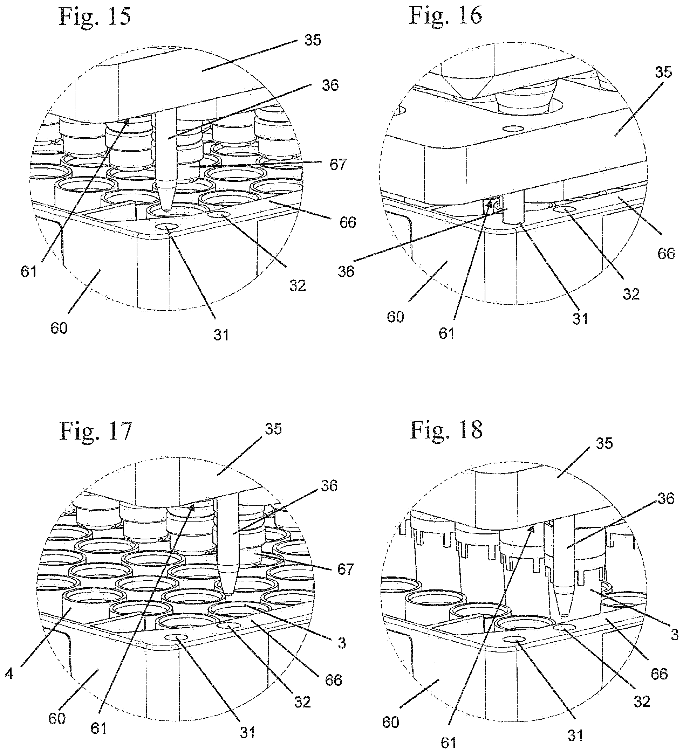

In one embodiment, the pipette tips comprise a receiving ridge (27, 28) which contacts the seating areas (22, 26) of the through bore-hole (23, 25) when the pipette tip (3, 4) is seated in the rack (60) (Fig. 15, Fig. 16). More preferably the second type of tips (3) has a shorter receiving ridge (27) than the first type of tips (4). The difference in height between receiving ridge (27) and (28) is equal to the difference in height of the rim of through bore holes (23) and (25). This has the advantage that all pipette tips (3, 4) are on the same level for engagement with the process head (35), but at the same time, the second type of pipette tips (3) can be seated on a higher level on the rack to prevent contamination by liquid from the first type of tips (4). In addition, it provides a visual control for the correct assembly of first and second types of pipette tips (3, 4) in the rack (60) since the top surface of tips (3, 4) seated in the wrong position would be at a lower or higher level than the correctly seated tips (3, 4).

The receiving ridges (27, 28) on the tip (3, 4) do not comprise a continuous circumferential seating base (59) for contacting the rim of through bore-hole (23, 25). The seating base (59) only has punctual sites of contact with the seating areas (22, 26). One advantage is that less material is used for the tip (3, 4) and that the tip (3, 4) can be produced with higher precision and with less strain. The reduced area of contact between the tip (3, 4) and the seating area (22, 26) has the additional advantage that electrostatic charge of the tips (3, 4) is reduced.

Tips (3, 4) are matted in the area of shaft (29) with a surface roughness of 0.8 to 1.6 um, and polished in the area of the tip-end (30). The matted surface of the shaft (29) allows droplets of liquid to lie flat on the surface and to evaporate more quickly. Thus, when tip (4) is inserted into the through bore-hole (23, 25) no or less liquid can be wiped off if the tip (4) contacts seating area (22, 26), and, thus, the risk of contamination is reduced. The polished tip-end (30) causes droplets of liquid to stay on the tip-end (30) in a pearl-type manner and to be wiped off the tip-end (30) when the tip (4) submerges from a liquid. The tip-end (30), thus, remains without liquid attached.

In one embodiment, the upper rack (1) comprises a first type of positioning elements (10) (Fig 21, Fig. 22) and a second type of positioning elements (31, 32, 33, 34) (Fig. 17, Fig. 18). The first type of positioning elements (10) allows an approximate positioning of the rack (60) relative to a process head (35), while the second type of positioning elements (31, 32, 33, 34) allows a precise positioning of said rack (60) relative to the process head (35). The approximate positioning by the first type of positioning elements (10) ensures that the second type of positioning elements (31, 33) or (32, 34) are aligned with counter-positioning elements (36) on the process head (35). The advantage of the two types of positioning elements is that the positioning of rack (60) and process head (35) for tip engagement is fast and precise.

The second type of positioning elements (31, 33) or (32, 34) are located on the top surface (also referred to as surface plate) (51) of the rack (60) (Fig. 17 to 20). The counter-positioning elements (36) are located on the bottom surface (61) of the process head (35).

The positioning elements (31, 33) engage with counter-positioning elements (36) on the process head (35) to align the first type of pipette tips (4) with the interface on the process head (35) (Fig. 17, Fig. 18). Alternatively, positioning elements (32, 34) engage with counter-elements (36) on the process head (35) to align the second type of pipette tips (3) with the interface (67) of the process head (35) (Fig. 19, Fig. 20).

The positioning elements are openings (31, 32, 33, 34) in the top surface (51) of the rack (60), preferably located in opposite corners of the top surface (51) of the rack (Fig. 1). The counter-positioning elements, in this embodiment, on the bottom surface (61) of the process head (35) are rods (36) located in the corresponding corners of the process head (35). Openings (31, 32, 33, 34) and rods (36) are constructed such that rods (36) can engage with openings (31, 32 or 33, 34) for precise alignment of rack (60) and process head (35). Thus, the tip (3, 4) and the interface (67) on the process head (35) for engagement of the tips (3, 4) are precisely aligned, and the interface of the process head (35) can engage the tip (3, 4). In a more preferred embodiment, two of the openings (31, 32) have a circular cross-section for precise positioning, in a horizontal plane. Openings (33, 34) have an elongated shape for compensation of manufacturing tolerances. This is advantageous because the rack (60) can be precisely positioned without canting with the process head (35).

The footprint of the rack, in one embodiment, comprises a length and width of the base comprises a length and width of the base essentially corresponding to ANSI SBS footprint format. In one embodiment, the length is 127.76mm +/- 0.25 mm, and the width is 85.48 mm +/-0.25 mm. The rack (60) comprises form locking elements (38) for interacting with a handler (500). The rack (60) can be gripped, transported and positioned quickly and safely at high speed while maintaining the correct orientation and position.

The term "essentially corresponding to ANSI SBS footprint format" means that the base of any one consumable may have cut out sections, e.g. cut corners. Thus, the surface geometry of different types of consumables with ANSI SBS footprint format can be different. However, the base of any one consumable fits into a station which has a corresponding receiving part in ANSI SBS footprint format.

The rack (60) comprises one or more hardware-identifiers (39), wherein said hardware identifiers (39) are an integral part of the consumable. The rack (60) further comprises stacker guiding elements (6, 7). Said hardware identifiers (39) and stacker guiding elements (6, 7) comprise ridges and/or recesses on the side walls of the consumables, wherein said pattern of ridges and/or recesses is unique for a specific type of consumable, preferably the rack (60). The stacker guiding elements (6, 7) and hardware-identifiers (39) ensure that the user can only load the rack (60) into the appropriate stacker position of an analytical instrument (46).

The rack (60) also comprises recesses (37) in the side wall of the upper rack (1). The recesses (37) comprise a bottom wall (48) and side walls (49). The rack (60) is positioned inside an opening in an analytical instrument (46). When the rack (60) is positioned, the bottom wall (48) of recess (37) contacts the surface of the process deck (47) of the analytical instrument (46). Said recesses (37) engage with counter elements on an analytical instrument (46) to hold down the rack (60) in the instrument. This allows for additional stabilization of the rack (60) inside the analytical instrument (46).

The insert rack (14) comprises an external centering surface (11) which interacts with internal centering surface (12) on the upper rack (1) to allow centering during assembly of the rack (60) (Fig. 11, 12; Fig. 25 to 26).

Upper rack (1) and lower rack (2) are fixed during assembly, preferably by a snap-fit (44) located on either one of two opposite side walls (63, 64) of the frame of the upper rack (1) and a snap groove (45) located on either one of two corresponding opposite side walls of the lower rack (2).

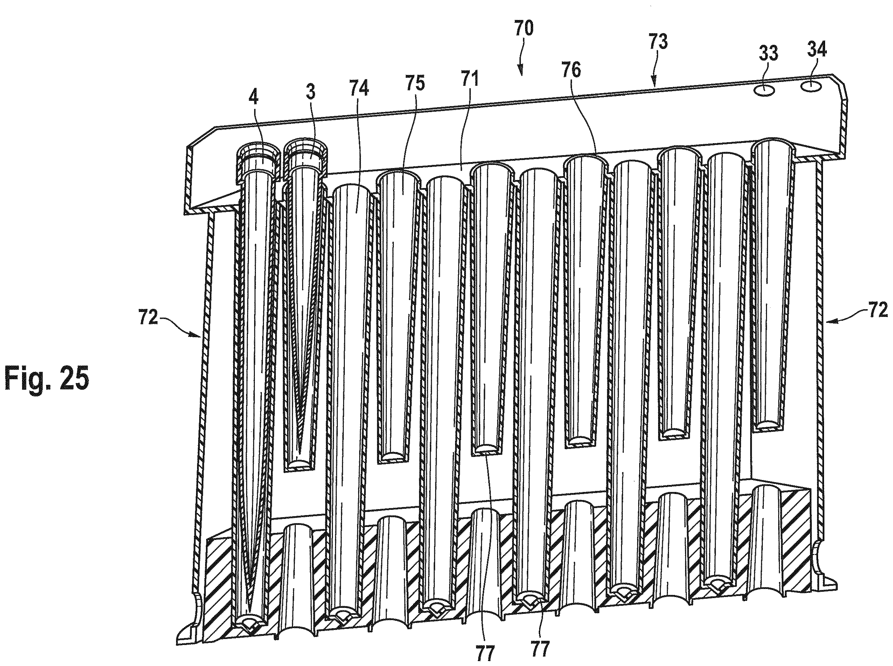

A second embodiment of an exemplary rack is an integral one part tip rack (70) comprising a top surface (71), two opposing short (72) and two opposing long (73) side walls (Fig. 25). The tip rack comprises vessels (74, 75) for holding pipette tips (3, 4). Said vessels (74, 75) comprise an open top (76) and a closed bottom (77). Any one vessel (74, 75) can hold one tip (3, 4). The footprint of the rack (70) preferably comprises a length and width of the base essentially corresponding to ANSI SBS footprint format. More preferably, the length is 127.76mm +/- 0.25 mm, and the width is 85.48 mm +/- 0.25 mm. Preferred embodiments of said second embodiment comprise hardware identifiers (6, 7, 39), recesses (37) to engage with counter elements on an analytical instrument to hold down the rack in the instrument as described for the first embodiment of said rack. Preferred embodiments also comprise positioning elements (31, 32, 33, 34, 10) as described for the first embodiment of the rack (60).

### Positioning of Process head and tip rack

A positioning method for aligning a rack and a process head is also disclosed. The positioning method comprises aligning at least two positioning elements located on the bottom surface of said process head with at least two positioning elements located on the top surface of said rack, and mechanically engaging said positioning elements on the process head with the positioning elements of the rack. Then, the process head selectively engages the pipette tips of a first type or pipette tips of a second type. Process heads relate to pipettor for engaging with pipette tips to pipette liquids. Such process heads are well known in the art.

The tip rack comprises pipette tips, and said process device is a process head comprising an interface for engaging with pipette tips. The pipette tips are arranged in a 2-dimensional array in said pipette rack. The tip rack is integrally formed and comprises independent chambers for accommodating at least a first type if pipette tips and a second type of pipette tips. The first type of pipette tips and the second type of pipette tips are stored in alternate rows. The process head (35) comprises a number of interfaces (67) equal to the number of pipette tips of a first type (4).

The engagement of the positioning elements on the process device and the positioning elements on the tip rackcause the interface of the process device to interact and engage with the pipette tips.

A "rack" is understood to be any type of device used in an analytical system which holds a sample, a device which holds a consumable which is constructed and arranged to hold a sample. The rack has a top surface and four sidewalls, wherein two side walls are parallel and opposing each other. Optionally, the rack also has a bottom surface. A consumable is understood to be a device which is introduced recurrently to the analytical system for use in an analytical test. A consumable may be used a single time before being replaced, or it may be use multiple times. In one embodiment, said rack holds vessels. Said vessels can hold a sample for use in an analytical system. Said sample is understood to relate to a sample to be processed in an analytical system, or a reagent to be used in an analytical system. Alternatively, said vessels are pipette tips for aspirating and dispensing liquids. Said liquids may be samples or reagents as defined hereinbefore. Thus, said rack may be a pipette tip rack. Embodiments of said pipette tip rack include integrally formed racks or racks comprising more than one part, as shown in Fig. 25 or 1. A multiple part rack is described herein. In another embodiment, the rack is a multiwell plate comprising vessels integrally attached to said rack.

A process device is any type of device used in an analytical system which is involved in the processing of a sample during an analytical test, and which requires alignment with a sample device. A preferred embodiment of a process device is a process head. A process head is understood to be a device which engages with pipette tips. Said device comprises an interface which can engage with said pipette tips. Preferably, said interface comprises cones. However, other interfaces known in the art are also included. In other embodiments, said process device may also include devices for gripping consumables. Preferred embodiments of interfaces are cones, cylindrical interfaces or interfaces with O-rings.

Positioning elements are understood to be elements located on the process device and on the rack. Said elements are constructed and arranged such that positioning elements on the process device can interact with positioning elements on the rack, thereby mechanically engaging the process device and the rack.

The process head preferably comprises a number of interfaces equal to the number of pipette tips of a first type. The process head selectively engages with pipette tips of a first type or pipette tips of a second type. To achieve this, at least two positioning elements on the tip rack engage with at least two positioning elements on the process head such that the process head only engages with pipette tips of a first or with pipette tips of a second type. The selective engagement with pipette tips of different types can also be accomplished with a tip rack which comprises more than two types of pipette tips simply by choosing the appropriate number of positioning elements on the tip rack.

Preferably, one positioning element on the rack located in one corner has a first shape and the second positioning element on the rack which is mounted on the diagonally opposite corner of said top surface of said tip rack has a second shape. More preferably, the first shape is a circular cross-section and the second shape is an elongated shape. The advantages of this embodiment are further described below. In order to achieve a more reliable positioning, the method may also include a a first positioning step, wherein the positioning elements located on the bottom surface of said process device and the positioning elements located on the top surface of said rack are aligned. Preferably, the first positioning is mediated by engagement of said positioning element with a notch.

Further preferred embodiments of the method disclosed herein are described hereinbefore and hereinafter.

The interfaces (67) of the process head may be conical or cylindrical, and may preferably comprise an O-ring.At least two positioning elements (31, 32, 33, 34) on the tip rack (60, 70) engage with at least two positioning elements (36) on the process head (35) such that the process head (35) only engages with pipette tips of a first (4) or with pipette tips of a second (3) type. Said method additionally comprises a first positioning step, wherein the positioning elements (36) located on the bottom surface (61) of said process device (35) and the positioning elements (31, 32, 33, 34) located on a top surface (66) of said rack (60, 70) are aligned. Further preferred, said first positioning is mediated by engagement of a positioning element (10) with a notch (20). In a more preferred embodiment, said positioning elements (36) on the process device are pins, and said positioning elements (31, 32, 33, 34) on the top surface (66) of said rack are openings which are sized to engage with the pins. In a most preferred embodiment, the tip rack (60, 70) comprises four positioning elements (31, 32, 33, 34) and the process head (35) comprises two positioning elements (36).

In a preferred embodiment of the method hereinbefore described, said positioning elements (31, 32, 33, 34, 36) are located in diagonally opposite corners of said process device (35) or said rack (60, 70). However, other locations may be envisioned which lead to a similar result. Preferably, the tip rack (60, 70) comprises an equal number of first pipette tips (4) and second pipette tips (3). Most preferably, one positioning element (31, 32) on the rack (60, 70) located in one corner is a circular opening, and the corresponding second positioning element (33, 34) on the rack which is mounted on the diagonally opposite corner of the top surface of said tip rack (60, 70) is an oval opening.

Further preferred embodiments of the method hereinbefore described are described herein.

## Claims

1. A method of positioning a process head (35) comprising an interface (67) for engaging with pipette tips (3,4) with a tip rack (70), wherein said pipette tips (3,4) are arranged in a said tip rack (70) in a 2-dimensional array, wherein said tip rack (70) is an integral one part rack (70) comprising independent chambers (74,75) for accommodating at least a first type of pipette tips (3) and a second type of pipette tips (4) and wherein said first type of pipette tips (3) and said second type of pipette tips (4) are stored in alternate rows, wherein said process head (35) comprises a number of interfaces equal to the number of pipette tips of a first type , said method comprising the steps of
a) aligning at least two positioning elements (36) located on the bottom surface (61) of said process head (35) with at least two positioning elements (31, 32, 33, 34) located on the top surface (66) of said tip rack (60,70), and
b) mechanically engaging said positioning elements (36) on said process head (35) with said positioning elements (31, 32, 33, 34) on said tip rack (60,70),
c) the process head selectively engaging said pipette tips of a first type or pipette tips of a second type.

2. The method of claim 1 , wherein at least two positioning elements (31,32,33,34) on the tip rack engage with at least two positioning elements (36) on the process head (35) such that the process head (35) only engages with pipette tips of a first (4) or with pipette tips of a second type (3).

3. The method of any one of claims 1 or 2, wherein said positioning elements on the process head are pins (36), and said positioning elements on the rack are openings (31, 32, 33, 34) which are sized to engage with the pins (36).

4. The method of any one of claims 1 to 3 , wherein said positioning elements (31, 32, 33, 34, 36) are located in diagonally opposite corners of said process head or said rack (60,70).

5. The method of any one of claims 1 to 4 , wherein the tip rack (60,70) comprises an equal number of first pipette tips (4) and second pipette tips (3).

6. The method of any one of claims 1 to 5 , wherein one positioning element (31,32) on the rack (60,70) located in one corner has a first shape and the second positioning element (33, 34) on the rack (60,70) which is mounted on the diagonally opposite corner of said top surface (66) of said tip rack (60,70) has a second shape.

7. The method of claim 6 , wherein the first shape is a circular cross-section and the second shape is an elongated shape.

8. The method of any one of claims 1 to 7 , additionally comprising a first positioning step, wherein the positioning elements (36) located on the bottom surface (66) of said process head (35) and the positioning elements (31,32,33,34) located on the top surface (61) of said rack are (60,70) aligned.

9. The method of claim 8 , wherein said first positioning is mediated by engagement of said positioning element (10) with a notch (20).

## Patentansprüche

1. Verfahren zum Positionieren eines Prozesskopfes (35), der eine Schnittstelle (67) zum Eingreifen in Pipettenspitzen (3, 4) umfasst, in Bezug auf ein Spitzengestell (70), wobei die Pipettenspitzen (3, 4) in dem Spitzengestell (70) in einer 2-dimensionalen Anordnung angeordnet sind, wobei das Spitzengestell (70) ein integrales einstückiges Gestell (70) ist, das unabhängige Kammern (74, 75) zur Aufnahme zumindest einer ersten Art von Pipettenspitzen (3) und einer zweiten Art von Pipettenspitzen (4) umfasst, und wobei die erste Art von Pipettenspitzen (3) und die zweite Art von Pipettenspitzen (4) in abwechselnden Reihen untergebracht sind, wobei der Prozesskopf (35) eine Anzahl von Schnittstellen umfasst, die gleich der Anzahl von Pipettenspitzen einer ersten Art ist, wobei das Verfahren folgende Schritte umfasst:
a) Ausrichten von zumindest zwei Positionierungselementen (36), die sich auf der unteren Fläche (61) des Prozesskopfes (35) befinden, mit zumindest zwei Positionierungselementen (31, 32, 33, 34), die sich auf der oberen Fläche (66) des Spitzengestells (60, 70) befinden, und
b) mechanisches In-Eingriff-Bringen der Positionierungselemente (36) auf dem Prozesskopf (35) mit den Positionierungselementen (31, 32, 33, 34) auf dem Spitzengestell (60, 70),
c) wobei der Prozesskopf selektiv mit den Pipettenspitzen einer ersten Art oder den Pipettenspitzen einer zweiten Art in Eingriff tritt.

2. Verfahren nach Anspruch 1, wobei zumindest zwei Positionierungselemente (31, 32, 33, 34) auf dem Spitzengestell mit zumindest zwei Positionierungselementen (36) auf dem Prozesskopf (35) in Eingriff treten, sodass der Prozesskopf (35) nur mit Pipettenspitzen einer ersten (4) oder mit Pipettenspitzen einer zweiten Art (3) in Eingriff tritt.

3. Verfahren nach einem der Ansprüche 1 oder 2, wobei die Positionierungselemente auf dem Prozesskopf Stifte (36) sind und die Positionierungselemente auf dem Gestell Öffnungen (31, 32, 33, 34) sind, die so bemessen sind, dass sie mit den Stiften (36) in Eingriff treten.

4. Verfahren nach einem der Ansprüche 1 bis 3, wobei sich die Positionierungselemente (31, 32, 33, 34, 36) in diagonal entgegengesetzten Ecken des Prozesskopfes oder des Gestells (60, 70) befinden.

5. Verfahren nach einem der Ansprüche 1 bis 4, wobei das Spitzengestell (60, 70) eine gleiche Anzahl an ersten Pipettenspitzen (4) und zweiten Pipettenspitzen (3) umfasst.

6. Verfahren nach einem der Ansprüche 1 bis 5, wobei ein Positionierungselement (31, 32) auf dem Gestell (60, 70), das sich in einer Ecke befindet, eine erste Form aufweist und das zweite Positionierungselement (33, 34) auf dem Gestell (60, 70), das in der diagonal entgegengesetzten Ecke der oberen Fläche (66) des Spitzengestells (60, 70) eingerichtet ist, eine zweite Form aufweist.

7. Verfahren nach Anspruch 6, wobei die erste Form ein kreisförmiger Querschnitt ist und die zweite Form eine längliche Form ist.

8. Verfahren nach einem der Ansprüche 1 bis 7, ferner einen ersten Positionierungsschritt umfassend, bei dem die Positionierungselemente (36), die sich auf der unteren Fläche (66) des Prozesskopfes (35) befinden, und die Positionierungselemente (31, 32, 33, 34), die sich auf der oberen Fläche (61) des Gestells (60, 70) befinden, miteinander ausgerichtet werden.

9. Verfahren nach Anspruch 8, wobei die erste Positionierung durch In-Eingriff-Bringen des Positionierungselements (10) mit einer Kerbe (20) vermittelt wird.

## Revendications

1. Procédé de positionnement d'une tête de procédé (35) comprenant une interface (67) pour venir en prise avec des pointes de pipettes (3, 4) avec un portoir pour pointes (70), lesdits pointes de pipettes (3, 4) étant agencés dans ledit portoir pour pointes (70) selon un réseau en 2 dimensions, ledit portoir pour pointes (70) étant un portoir intégral d'un seul tenant (70) comprenant des chambres indépendantes (74, 75) pour loger au moins un premier type de pointes de pipettes (3) et un second type de pointes de pipettes (4) et ledit premier type de pointes de pipettes (3) et ledit second type de pointes de pipettes (4) étant disposés en rangées alternées, ladite tête de procédé (35) comprenant un certain nombre d'interfaces égal au nombre de pointes de pipettes d'un premier type, ledit procédé comprenant les étapes consistant à :
a) aligner au moins deux éléments de positionnement (36) situés sur la surface inférieure (61) de ladite tête de procédé (35) avec au moins deux éléments de positionnement (31, 32, 33, 34) situés sur la surface supérieure (66) dudit portoir pour pointes (60, 70) et
b) mettre en prise mécaniquement lesdits éléments de positionnement (36) sur ladite tête de procédé (35) avec lesdits éléments de positionnement (31, 32, 33, 34) sur ledit portoir pour pointes (60, 70),
c) la tête de procédé venant en prise sélectivement avec lesdits pointes de pipettes d'un premier type ou lesdits pointes de pipettes d'un second type.

2. Procédé selon la revendication 1, dans lequel au moins deux éléments de positionnement (31, 32, 33, 34) sur le portoir pour pointes viennent en prise avec au moins deux éléments de positionnement (36) sur la tête de procédé (35), de telle sorte que la tête de procédé (35) vient uniquement en prise avec les pointes de pipettes d'un premier type (4) ou avec les pointes de pipettes d'un second type (3).

3. Procédé selon l'une quelconque des revendications 1 à 2, dans lequel lesdits éléments de positionnement sur la tête de procédé sont des embouts (36) et lesdits éléments de positionnement sur le portoir sont des orifices (31, 32, 33, 34) dimensionnés pour venir en prise avec les embouts (36).

4. Procédé selon l'une quelconque des revendications 1 à 3, dans lequel lesdits éléments de positionnement (31, 32, 33, 34, 36) sont situés aux angles diagonalement opposés de ladite tête de procédé ou dudit portoir (60, 70).

5. Procédé selon l'une quelconque des revendications 1 à 4, dans lequel le portoir pour pointes (60, 70) comprend un nombre égal de premières pointes de pipettes (4) et de secondes pointes de pipettes (3).

6. Procédé selon l'une quelconque des revendications 1 à 5, dans lequel un élément de positionnement (31, 32) sur le portoir (60, 70) situé dans un angle présente une première forme et le second élément de positionnement (33, 34) sur le portoir (60, 70) qui est monté dans l'angle diagonalement opposé de ladite surface supérieure (66) dudit portoir pour pointes (60, 70) présente une seconde forme.

7. Procédé selon la revendication 6, dans lequel la première forme est une section transversale circulaire et la seconde forme est une forme allongée.

8. Procédé selon l'une quelconque des revendications 1 à 7, comprenant de plus une première étape de positionnement, les éléments de positionnement (36) situés sur la surface inférieure (66) de ladite tête de procédé (35) et les éléments de positionnement (31, 32, 33, 34) situés sur la surface supérieure (61) dudit portoir (60, 70) étant alignés.

9. Procédé selon la revendication 8, dans lequel ledit premier positionnement est assuré par la mise en prise dudit élément de positionnement (10) avec une encoche (20).
